# EUROPEAN PATENT SPECIFICATION

(11) **EP 2 058 343 B1**
(45) Date of publication and mention of the grant of the patent: **21.12.2011**
(21) Application number: 07380309.0
(22) Date of filing: 08.11.2007
(51) Int. Cl.: C08F 283/01, C08G 63/676, C09D 167/07

(54) **Styrene-free unsaturated polyester resin composition**
Styrolfreie ungesättigte Polyester-Harzzusammensetzung
Composition de résine de polyester insaturé exempt de styrène

(43) Date of publication of application: 13.05.2009
(73) Proprietor: Arkema Coatings Resins S.A.U., 28036 Madrid (ES)
(72) Inventor: Albalat Perez, Jordi, 08032 Barcelona (ES); Garcia, José Antonio, 08228 Terrassa (ES)
(74) Representative: Killis, Andréas

(56) References cited:
- EP-A- 0 790 267
- BE-A1- 888 519
- US-A- 5 470 897
- US-A1- 2003 059 555

## Description

The present invention relates to unsaturated polyester resin compositions for curable coating or moulding compositions. The invention specifically relates to resin compositions, and more particularly to low molecular weight resin compositions, with low styrene quantity or even styrene-free, useful for preparing protective, decorative, surface treatment coatings, in particular for wood and derivatives, imitating wood materials, metal or plastic substrates.

The resin compositions based on unsaturated polyester resins used for radiation (by free radical mechanism or by radiation and/or peroxide mechanism) curable coatings generally contain styrene as a copolymerizable monomer. Styrene and other volatile organic compounds (VOC) evaporate during the film drying, resulting in costly purification of the air and excessively long drying time. Systems containing styrene frequently contain paraffin as drying accelerator in order to prevent disruptive influence of atmospheric oxygen.

US 5,095,066 describes unsaturated polyester which do not contain styrene and to which paraffin is added. After curing, the resultant films have a poor polishability and a surface with a poor flow-out. Moreover, the drying times of these systems are very long.

US 5,068,125 and US 5,470,897 also disclose unsaturated polyester resins which do not contain styrene. However, the coating compositions resulting from these resins do not present a satisfactory compromise in terms of flexibility, cold crack resistance and gloss, for high film thickness.

None of these prior art documents does provide a satisfactory solution to the problem of the protection of wood and derivatives, imitating wood materials, metal or plastic substrates, particularly for automobile interior body part, comprising an excellent compromise in terms of high flexibility, high mechanical performances and high gloss.

The present invention overcomes the disadvantages of the compositions of the prior art. The specific resin compositions of the present invention are particularly suitable for the preparation of coating compositions for wood and derivatives, imitating wood materials, metal or plastic or composite substrates, but also for moulding compositions or gel coat compositions, which satisfactorily meet the following needs and requirement :
- a low molecular weight resin composition for environmentally friendly coating compositions, with low VOC, the said resin composition which may be free of styrene,
- a relatively low viscosity, without sagging during the application,
- a high reactivity, with a high gloss and a high mechanical behavior in terms of a compromise between high flexibility/high hardness/high gloss for the resulting coating,
- an excellent cold crack resistance, in such a way that, particularly for the obtained films, a resistance of at least 30 cycles of cold-check test is achieved, even with a highly thick film,
- a really sandable and polishable protective coating, and
- an absence of tack after cure, which means a high reactivity at the coating surface for the curable coating composition.

It is an object of the present invention to provide specific resin compositions which are particularly suitable for use in curable coating or moulding compositions.

The invention does also relate to a process for curing the said coating or moulding composition comprising the said resin composition, and to coatings, moulded articles, composites or laminates resulting from this curing.

Another object of the invention relates to a process for applying the coating composition of the invention to a substrate.

Finally, the invention concerns coated substrates and automobile interior body parts coated by a coating composition as defined according to the invention.

Thus, the first subject-matter of the present invention is a styrene-free resin composition, comprising :
a) at least one α,β-ethylenically unsaturated polyester, liquid at room temperature with said unsaturated polyester a) having a bulk viscosity at 25°C, measured according to Standard ISO 3219, ranging from 15 000 to 40 000 mPa.s, and
b) at least one comonomeric component comprising :
   b1) at least one comonomer selected from (meth)acrylates of cycloaliphatic alcohols, and
   b2) optionally, at least one comonomer different from b1), with a weight content of said comonomer b) with respect to the total weight of a) + b) ranging from 0.5 to 45%.

Concerning the said (meth)acrylate of cycloaliphatic alcohol, it may comprise a cycloaliphatic structure selected from isobornyl, dicyclopentadienyl or cyclohexyl. More preferably, the said (meth)acrylate of cycloaliphatic alcohol is isobornyl acrylate and/or isobornyl methacrylate.

Preferably, the said resin composition may consist only of :
a) at least one α,β-ethylenically unsaturated polyester, liquid at room temperature, and
b) at least one comonomeric component comprising :
   b1) at least one comonomer selected from (meth)acrylates of cycloaliphatic alcohol, and
   b2) optionally, at least one comonomer different from b1).

According to the invention, the said resin composition is styrene-free, which means that there is no any styrene with the said component b) or with any other component of the resin composition.

The weight ratio of the said comonomer b) with respect to the total weight of a) + b) is preferably from 5 to 40%, and more preferably from 5 to 25%.

More particularly, the said component b) may comprise, besides b1), at least one comonomer b2) selected from mono(meth)acrylates or di(meth)acrylates of oligoether diols, the said oligoether diols comprising from 2 to 4 alkoxy units, or (meth)acrylate of tetrahydrofurfuryl. Examples of the said comonomer b2) are : tetrahydrofurfuryl (meth)acrylate, methoxypolyethyleneglycol 350 mono(meth)acrylate, ethylene glycol dimethacrylate and diethyleneglycol di(meth)acrylate. The weight ratio of b2) with respect to the total weight of b1) + b2) may range from 0 to 50%, and preferably from 0 to 30%.

The said unsaturated polyester a) preferably has a degree of polymerisation (number of ester units) varying from 2 to 6, and more preferably from 4 to 6. It may correspond to a number average molecular weight Mn ranging from 400 to 900.

Unsaturated polyester a) has a bulk viscosity at 25°C, measured according to Standard ISO 3219, preferably ranging from 15 000 to 35 000 mPa.s, and more preferably from 15 000 to 30 000 mPa.s.

Acid number may range up to 40 mg KOH/g, preferably up to 30 mg KOH/g, and more preferably from 10 to 30 mg KOH/g.

The polymer content of the resin composition according to the invention may vary from 55 to 95%, and being the complementary (up to 100%) of the comonomeric component b).

The α,β-ethylenically unsaturated polyester a) according to the invention can be obtained as the reaction product of :
i) at least an acidic component comprising at least one α,β-ethylenically unsaturated dicarboxylic acid and/or anhydride,
ii) an alcoholic component comprising :
   ii) c) at least one diol having 2 to 8 carbon atoms,
   ii) d) one monoalcohol component comprising :
      ii) d1) at least one monoalcohol bearing at least one allylic unsaturation, and
      ii) d2) at least one saturated aliphatic monoalcohol having 4 to 10 carbon atoms or one aromatic monoalcohol having 7 to 10 carbon atoms.

The acidic component i) may be selected from fumaric, itaconic, maleic, succinic, adipic, sebacic, norbornenedicarboxylic, phthalic, isophthalic, terephthalic, tetrahydrophthalic acids and/or anhydrides and mixture of these acids/anhydrides. Fumaric and maleic acids are preferred. The isomerization rate of maleic anhydride during the polymerization process ranges between 50 and 95% depending on the diol nature.

Suitable diols ii) c) may be ethylene glycol, diethylene glycol, triethylene glycol, propylene glycol and mixture of these diols. The preferred diols ii) c) are ethylene glycol and/or propylene glycol.

Suitable monoalcohols ii) d1) may be allylic alcohol, trimethylolpropane diallyl ether, glycerol diallyl ether, pentaerythritol triallyl ether or mixtures of these alcohols, and the said saturated aliphatic or aromatic monoalcohol ii) d2) may be selected from butanol, benzyl alcohol, cyclohexanol, n-hexanol, isooctanol, isododecanol or mixtures of these alcohols. Preferred monoalcohols ii) d1) are trimethylolpropane diallyl ether, and preferred monoalcohols ii) d2) are benzyl alcohol. The molar ratio of the said monoalcohols ii) d1) / ii) d2) may range from 0,8 to 1,5, and preferably from 0,9 to 1,2. Component ii) d1) may represent from 15 to 25% of the total OH equivalents of the whole alcoholic component ii). The equivalent ratio carboxyl groups/hydroxyl groups may vary up to 1/1, and preferably from 0,6/ 1 to 1/1.

The preparation process of the said unsaturated polyester resin composition according to the invention may comprise at least the following essential steps :
- synthesizing an α,β-ethylenically unsaturated polyester a) as defined according to the invention, preferably by bulk process, and
- diluting the α,β-ethylenically unsaturated polyester a) obtained during the first step in at least one comonomeric component b) up to the targeted solids content, to obtain the resin composition as defined according to the invention.

The second subject-matter of the invention concerns a curable coating or moulding composition comprising at least one resin composition as defined according to the invention, the said curable composition preferably being a sprayable composition. The said curable composition is preferably curable by radiation and/or by peroxide or thermal route, and more specifically by a curing process comprising at least one step of radiation and/or peroxide curing.

More particularly, the said coating composition may be a composition of protective coating and/or decorative coating and/or a surface treatment composition for wood and derivatives, imitating wood materials, metal or plastic substrates. Examples of coating compositions comprise paint, varnish, sealer or gel coat composition.

The present invention does also cover the use of the said resin composition in a radiation-curable or in a peroxide-curable coating or moulding composition, the said coating composition possibly being a paint, varnish, sealer or gel coat composition. The use of the said resin composition or of the said coating composition can be for the protection and/or decoration and/or surface treatment of substrates such as wood and derivatives, imitating wood materials, metal or plastic (including composites) substrates, more particularly in furniture and automotive applications. For such uses, the said coatings are preferably thick multilayer coatings with a total thickness from 100 to 2000 µm. Several layers could be applied one after the other, after gellification of the previous layer. The number of layers may vary from 1 to 10, and preferably from 2 to 6, with a thickness from 100 µm to 300 µm for each one.

More particular uses of the said coating compositions may be in sealers for wood finishing or in glossy protective or decorative coatings, and the said moulding compositions may be composites or laminate compositions. Examples of uses in composites are uses in BMC or SMC moulding compositions. A particular use in coating or composite is in clear or pigmented gel coat compositions.

They are also part of the invention a coating resulting from the cure of at least one coating, a moulded article, a composite or a laminate, resulting from the cure of a moulding composition as defined according to the present invention. The said coating as mentioned can be a multilayer coating with a thickness ranging from 100 to 2000 µm, and preferably ranging from 200 to 1000 µm. The said coating can be a cured paint, varnish or gel coat.

The said coating can be applied to a substrate by a process comprising at least the steps of :
a) spraying a coating composition, as defined above on the said substrate, which may be wood and derivatives, wood imitating materials, metal, plastic (including composites) substrates,
b) applying at least one coat, and preferably 2 to 6 coats, on the said substrate, to obtain a thickness from 100 to 2000 µm, and preferably from 200 to 1000 µm,
c) drying the coated substrate, and
d) optionally, polishing the surface after at least 24 hours.

The coated substrate is also part of the present invention, comprising at least one layer of a cured coating, resulting from a coating composition according to the invention. The said substrate can be wood and derivatives, imitating wood materials, metal or plastic, and more particularly for plastics it may be a composite substrate coated with a gel coat.

A more specific use of the coating composition of the present invention relates to automobile interior body parts for decorative purpose, coated with at least one coating composition according to the invention.

By way of illustration of the invention, the following examples demonstrate, without any limitation, the performances of the resin compositions and coatings as obtained, according to the claimed invention.

### I/ Starting materials

### a) Starting materials for the resin compositions

**Table 1**

| **Component** | **Commercial reference** | **Supplier** |
|---|---|---|
| Fumaric acid | - | Arkema |
| Itaconic acid | - | Iwata Chemical |
| Tetrahydrophthalic anhydride | - | Lonza |
| Trimethylolpropane | - | Perstop |
| Ethylene glycol | - | Ineos |
| Propylene glycol | - | Lyondell |
| Triethylene glycol | - | IQA |
| Trimethylopropane diallyl ether | TMPDE 80 | Perstop |
| Benzyl alcohol | - | Brenntag |
| Isobornyl methacrylate | SR423A | Sartomer |
| 1,4-butanediol dimethacrylate | SR-214 | Sartomer |

### b) Starting materials for the coating formulations

**Table 2**

| **Component** | **Commercial reference** | **Supplier** |
|---|---|---|
| Borchi Gol Lac 80 | - | Borchers |
| Ethyl acetate | - | BP |
| Co octoate at 6% | Co 6 Hex-Cem | OMG |
| Methyl Ethyl Ketone Peroxide | Peroxan ME 50 L | Pergam |

### II/ Preparation of the unsaturated polyesters

### Preparation in bulk.

### Example 1 :

In a glass reactor, equipped with a condenser, a stirrer, a temperature control system and an inlet for nitrogen, the starting components (see Table 3) and 70 ppm of the inhibitor (THQ) are added together. Then, the mixture is heated at a temperature of 160-170°C.

A strong stream of nitrogen (flow rate between 5 and 10 m³/h) is applied when the acid value drops very slowly to help the water stripping at the end of the polycondensation reaction.

The reaction mixture is maintained at 160-170°C with a strong bubbling of nitrogen, until the targeted acid values and viscosities are reached.

### Examples 2 to 7 :

The same procedure as described in example 1 is followed, with the quantities of Table 3.

The comparative example 6 is realized according to the procedure of example 2 of US 5,470,897.

**Table 3**

| | | **Ex. 1** | **Ex. 2** | **Ex. 3** | **Ex. 4** | **Ex. 5 (comp.)** | **Ex. 6 (comp.)** | **Ex. 7** |
|---|---|---|---|---|---|---|---|---|
| Fumaric acid | molar* | 0,75 | 1,00 | 1,00 | 1,00 | 0,50 | 1,00 | 1,00 |
| | weight | 740 g | 1000 g | 1000 g | 1000 g | 950 g | 1600 g | 1900 g |
| Itaconic acid | molar* | | | | | 0,50 | | |
| | weight | | | | | 1070 g | | |
| Tetrahydrophthalic | molar* | 0,25 | | | | | | |
| anhydride | weight | 324 g | | | | | | |
| Trimethylolpropane | molar | 0,22 | 0,22 | 0,65 | | | | |
| | weight | 250 g | 250 g | 750 g | | | | |
| Ethylene glycol | molar | | | | 0,30 | 0,30 | 0,60 | 0,30 |
| | weight | | | | 161 g | 306 g | 513 g | 306 g |
| Propylene glycol | molar | | | | 0,35 | 0,35 | 0,60 | 0,35 |
| | weight | | | | 230 g | 437 g | 629 g | 437 g |
| Triethylene glycol | molar | 0,22 | 0,22 | | | | | |
| | weight | 280 g | 280 g | | | | | |
| Trimethylolpropane diallyl ether | molar | 0,56 | 0,56 | 0,60 | 0,60 | 0,60 | 0,50 | 0,43 |
| | weight | 1020 g | 1020 g | 1150 g | 1150 g | 1520 g | 1476 g | 1520 g |
| Benzyl alcohol | molar | 0,65 | 0,65 | 0,40 | 0,40 | 0,40 | 0,50 | 0,40 |
| | weight | 598 g | 598 g | 370 g | 370 g | 703 g | 745 g | 703 g |

| | | | | | | | | |
|---|---|---|---|---|---|---|---|---|
| * molar proportion for 1 mole of global diacid. | | | | | | | | |

### III/ Characterization of the unsaturated polyesters

- **Acid number** Evaluation according to Standard ISO 3682.
- **Viscosity** Evaluation according to Standard ISO 3219.
- **Gardner colour** Evaluation according to Standard ISO 4630.

### IV/ Characteristics of the unsaturated polyesters

**Table 4**

| | **Ex. 1** | **Ex. 2** | **Ex. 3** | **Ex.4** | **Ex. 5** **(comp.)** | **Ex.** **(comp.)** | **Ex. 7** |
|---|---|---|---|---|---|---|---|
| Acid number (mg KOH/g) | 27 | 26 | 20 | 27 | 30,5 | 39 | 25 |
| Viscosity (mPa.s) | 15000 | 17000 | 30000 | 17000 | 6 200 | 275 | 21000 |
| Gardner colour | 1,3 | 1,5 | 0,7 | 0,7 | 4,4 | 1,0 | 1,0 |

### V/ Preparation of the resin compositions based on the above-cited unsaturated polyesters

### General procedure for the preparation of the resin compositions :

The resins compositions of the present invention consist of the dilution of the said unsaturated polyesters with the said monomeric (meth)acrylates, carried out in the same reactor of the polymerization process or in a blender, keeping the temperature of the blend lower than 65°C during the blending operation.

**Table 5 : Resin compositions**

| | **Ex.8** | **Ex. 9** **(comp.)** | **Ex. 10** | **Ex. 1** **(comp.)** |
|---|---|---|---|---|
| Unsaturated polyester resin according to example 7 | 100,00 | 100,00 | 100,00 | 100,00 |
| Isobornyl methacrylate SR423A | 10,00 | | 20,00 | |
| 1,4-butanediol dimethacrylate SR-214 | | 10,00 | | 20,00 |
| **Total :** | **110,00** | **110,00** | **120,00** | **120,00** |

### VI/ Performances of the resin compositions

Coatings based on the resin compositions of the present invention as well as on the comparative examples were prepared according to the formulations included in Table 7. The following properties were evaluated :
- **Gel time** A 50 g sample of the coating based on the resin composition material and the corresponding Cobalt octoate indicated in the table are placed in a disposable reaction vessel, maintained at 20°C and mixed with a stirring rod for 1 minute. Then, the indicated weight of methylethylketone peroxide catalyst (60% in dibutylphthalate solution) is added to the blend and the mass is stirred for 15 seconds, and then allowed to stand undisturbed in the reaction vessel until the gel point is reached. The gel point is that point in the curing time at which the blend becomes rubbery and snaps from the stirring rod when the rod is lifted out of the blend mass.
- **Viscosity** The viscosity of the coating based on the resin composition was measured by the Ford Cup viscosity method. A standardized Ford cup fitted with a #4 orifice was employed. The Ford cup viscosity is the time (in seconds) required for 100 mL of a sample at a temperature of 20°C to flow through the orifice.
- **Persoz hardness** The coating compositions in Table 7 were evaluated by measuring Persoz hardness in accordance with ISO 1522. The various examples in Table 5 were applied over a glass panel using a 100 µm doctor blade to get a dry film thickness of about 70 µm. The film hardness was measured after 24 hours using a Persoz hardness tester.
- **Gloss** Gloss was measured using a BYK-Gardner Micro-Tri-Gloss apparatus at geometry of 60° according to ASTM-D-523-89, Standard Test Method For Specular Gloss. The apparatus is calibrated with a polished glass surface.
- **Spray application on sapelly veneer** The coating compositions in Table 7 were applied by spray on wood panels (20 x 25 cm) consisting of particle board with sapelly veneer glued on its surface (6 x 150 g/m²). The different coats were applied with intermediate drying of 15 minutes to allow the evaporation of the volatile solvent.
- **Cold check resistance** The temperature change resistance of the coating films applied on wood was measured following the Standard test method ASTM D 1211-60. Cold check test (Cycles to Failure) : every cycle consists of :
   ■ 1 hour at 50°C,
   ■ Ramp of ½ hour from 50°C to - 20°C,
   ■ 1 hour at - 20°C,
   ■ Ramp of ½ hour from - 20°C to 50°C,
- **Scratch resistance. Nail scratching Method** Three testers placed their hands on the surface of the films of the coatings such that the back side of the hand was in contact with the surface thereof. The fingers were moved forward and backward 10 times with the back of each hand fixed, to scratch the coating film with nails. Then, the degree of scratches formed was examined and rated according to the following criterion :

**Table 6 :**

| | |
|---|---|
| **1** | Surface breakage or whitening |
| **2** | Scratches are very visible |
| **3** | Scratches are clearly visible |
| **4** | Slightly scratched surface (hardly visible) |
| **5** | No scratches |

**Table 7 : Coating formulations based on the resin compositions of Table 5**

| Resin composition used | **Ex. 8** | **Ex. 9 (comp)** | **Ex. 10** | **Ex. 11 (comp)** |
|---|---|---|---|---|
| Resin composition amount | 110,00 g | 110,00 g | 120,00 g | 120,00 g |
| Borchi Gol Lac 80 (10% in ethyl acetate) | 0,40 g | 0,40 g | 0,40 g | 0,40 g |
| Ethyl acetate | 10,00 g | 10,00 g | 10,00 g | 10,00 g |

| **Curing additives** : | | | | |
|---|---|---|---|---|
| Co octoate at 6% (on resin composition) | 2% | 2% | 2% | 2% |
| MEKP (on resin composition) | 3% | 3% | 3% | 3% |
| Gel time (minutes) | 55 | 25 | 50 | 21 |

| **Viscosity adjustment for spray application :** | | | | |
|---|---|---|---|---|
| Ethyl acetate | 15% | 13% | 12% | 10% |
| Viscosity Ford cup 4 at 20°C | 25" | 25" | 24" | 25" |
| Persoz hardness 24h (100 wet microns) | 212" | nd | 228" | 226" |

| **Spray application on sapelly veneer : 6** × **150 g/m²** | | | | |
|---|---|---|---|---|
| Surface drying after 2 h at 20°C (absence of tack) | OK | OK | OK | OK |
| Gloss at 60° | 92,0 | 92,0 | 94,0 | 94,0 |
| Cold check (30 cycles) | OK | cracks | OK | cracks |
| Scratch resistance | 4 | 3 | 4-5 | 3-4 |

## Claims

1. Resin composition **characterized in that** it comprises :
a) at least one α,β-ethylenically unsaturated polyester, liquid at room temperature with the said unsaturated polyester a) having a bulk viscosity at 25°C, measured according to Standard ISO 3219, ranging from 15 000 to 40 000 mPa.s, and
b) at least one comonomeric component comprising :
b1) at least one comonomer selected from (meth)acrylates of cycloaliphatic alcohols, and
b2) optionally, at least one comonomer different from b1),
and **in that** the weight content of the said comonomer b) with respect to the total weight of a) + b) ranges from 0.5 to 45%, with the said resin composition being styrene-free.

2. Resin composition as defined according to claim 1, wherein the said (meth)acrylate of cycloaliphatic alcohol comprises a cycloaliphatic structure selected from isobornyl, dicyclopentadienyl or cyclohexyl.

3. Resin composition as defined according to claims 1 or 2, wherein the said comonomer b1) is isobornyl acrylate and/or isobornyl methacrylate.

4. Resin composition as defined according to claims 1 to 4, wherein the said resin composition consists of components a) and b).

5. Resin composition as defined according to claims 1 to 4, wherein the said component b) comprises, besides b1), at least one comonomer b2) selected from mono(meth)acrylates or di(meth)acrylates of oligoether diols, the said oligoether diols comprising from 2 to 4 alkoxy units, or (meth)acrylate of tertrahydrofurfuryl.

6. Resin composition as defined according to claim 5, wherein the said comonomer b2) is selected from tetrahydrofurfuryl (meth)acrylate, methoxypolyethyleneglycol 350 mono(meth)acrylate, ethylene glycol di(meth)acrylate and diethylene glycol di(meth)acrylate.

7. Resin composition as defined according to claims 5 or 6, wherein the weight ratio of the said component b2) with respect to the total weight of b1) + b2) ranges from 0 to 50%, and preferably from 0 to 30%.

8. Resin composition as defined according to claims 1 to 7, wherein the bulk viscosity at 25°C, measured according to Standard ISO 3219, ranges from 15 000 to 30 000 mPa.s.

9. Resin composition as defined according to claims 1 to 8, wherein the said unsaturated polyester a) has a number average molecular weight Mn ranging from 400 to 900.

10. Resin composition as defined according to claims 1 to 9, wherein the said unsaturated polyester a) has an acid number up to 40 mg KOH/g, preferably up to 30 mg KOH/g, and more preferably from 10 to 30 mg KOH/g.

11. Resin composition as defined according to claims 1 to 10, wherein the said unsaturated polyester a) is the reaction product of :
i) at least an acidic component comprising at least one α,β-ethylenically unsaturated dicarboxylic acid and/or anhydride,
ii) an alcoholic component comprising :
ii) c) at least one diol having 2 to 8 carbon atoms,
ii) d) one monoalcohol component comprising :
ii) d1) at least one monoalcohol bearing at least one allylic unsaturation, and
ii) d2) at least one saturated aliphatic monoalcohol having 4 to 10 carbon atoms or one aromatic monoalcohol having 7 to 10 carbon atoms.

12. Resin composition as defined according to claim 11, wherein the said monoalcohol ii) d1) is selected from allylic alcohol, trimethylolpropane diallyl ether, glycerol diallyl ether, pentaerythritol triallyl ether or mixtures of these alcohols, and the said saturated aliphatic or aromatic monoalcohol ii) d2) is selected from butanol, benzyl alcohol, cyclohexanol, n-hexanol, isooctanol, isododecanol or mixtures of these alcohols.

13. Resin composition as defined according to claim 12, wherein the said monoalcohol ii) d1) is a trimethylolpropane diallyl ether, and the said monoalcohol ii) d2) is benzyl alcohol.

14. Resin composition as defined according to claims 11 to 13, wherein the molar ratio ii) d1) / ii) d2) ranges from 0,8 to 1,5, and preferably from 0,9 to 1,2.

15. Resin composition as defined according to claims 11 to 14, wherein the said component ii) d1) represents from 15 to 25% of the total OH equivalents of the whole alcoholic component ii).

16. Curable coating or moulding composition **characterized in that** it comprises at least one resin composition as defined according to claims 1 to 15.

17. Coating composition as defined according to claim 16, wherein the said coating composition is a composition of protective coating and/or decorative coating and/or surface treatment for wood and derivatives, imitating wood materials, metal or plastic substrates.

18. Coating composition as defined according to claims 16 or 17, wherein the said coating composition is a paint, varnish, sealer or gel coat composition.

19. Coating or moulding composition as defined according to claims 16 to 18, wherein the said composition is a sprayable composition.

20. Coating or moulding composition as defined according to claims 16 to 19, wherein the said composition is curable by radiation and/or by peroxide or thermal route.

21. Use of a resin composition as defined according to claims 1 to 15, **characterized in that** it is a radiation-curable or a peroxide-curable coating or moulding composition.

22. Use as defined according to claim 21, wherein the said coating composition is a paint, varnish, sealer or gel coat composition.

23. Use as defined according to claims 21 or 22 for the protection and/or decoration and/or surface treatment of wood and derivatives, imitating wood materials, metal or plastic substrates.

24. Use as defined according to claim 23, wherein the said use is in furniture or automotive applications.

25. Use as defined according to claims 21 to 24, wherein the said coatings are thick multilayer coatings with a total thickness from 100 to 2000 µm.

26. Use as defined according to claims 21 to 25, wherein the said use is in sealers for wood finishing or in glossy protective or decorative coatings.

27. Use as defined according to claim 21, wherein the said moulding composition is a composite or a laminate composition.

28. Process for curing a coating or a moulding composition as defined according to claims 16 to 20, **characterized in that** it comprises at least one step of curing by radiation and/or by peroxide or thermal route.

29. Coating, moulded article, composite or laminate, **characterized in that** it results from the cure of at least one composition as defined according to claims 16 to 20.

30. Coating as defined according to claim 29, wherein the said coating is a multilayer coating with a thickness ranging from 100 to 2000 µm.

31. Coating as defined according to claims 29 or 30, wherein the coating is a cured paint, varnish or gel coat.

32. Process for applying a coating to a substrate **characterized in that** it comprises at least the steps of :
a) spraying a coating composition as defined according to claims 16 to 20 on the said substrate,
b) applying at least one coat, and preferably 2 to 6 coats, on the said substrate, to obtain a thickness from 100 to 2000 µm, and preferably from 200 to 1000 µm,
c) drying this coated substrate, and
d) optionally, polishing the surface after at least 24 hours.

33. Coated substrate **characterized in that** it comprises at least one layer of a cured coating, resulting from a coating composition as defined according to claims 16 to 20.

34. Coated substrate as defined according to claim 33, wherein the said substrate is wood and derivatives, imitating wood materials, metal or plastic.

35. Automobile interior body part for decorative purpose **characterized in that** it is coated with at least one coating composition as defined according to claims 16 to 20.

## Patentansprüche

1. Harzzusammensetzung, **dadurch gekennzeichnet, dass** diese Folgendes umfasst:
a) mindestens einen α,β-ethylenisch ungesättigten Polyester, welcher bei Raumtemperatur flüssig ist, wobei der ungesättigte Polyester a) eine Volumenviskosität bei 25°C, gemessen gemäß Standard ISO 3219, im Bereich von 15 000 bis 40 000 mPa.s aufweist, und
b) mindestens eine comonomere Komponente, umfassend:
b1) mindestens ein Comonomer, gewählt aus (Meth)acrylaten von cycloaliphatischen Alkoholen, und
b2) gegebenenfalls mindestens ein von b1) verschiedenes Comonomer,
und **dadurch gekennzeichnet, dass** der Gewichtsgehalt des Comonomers b) bezüglich des Gesamtgewichts von a) + b) im Bereich von 0.5 bis 45 % liegt, wobei die Harzzusammensetzung styrolfrei ist.

2. Harzzusammensetzung wie gemäß Anspruch 1 definiert, wobei das (Meth)acrylat von cycloaliphatischem Alkohol eine cycloaliphatische Struktur umfasst, die aus Isobornyl, Dicyclopentadienyl oder Cyclohexyl gewählt ist.

3. Harzzusammensetzung wie gemäß den Ansprüchen 1 oder 2 definiert, wobei das Comonomer b1) Isobornylacrylat und/oder Isobornylmethacrylat ist.

4. Harzzusammensetzung wie gemäß den Ansprüchen 1 bis 4 definiert, wobei die Harzzusammensetzung aus den Komponenten a) und b) besteht.

5. Harzzusammensetzung wie gemäß den Ansprüchen 1 bis 4 definiert, wobei die Komponente b) neben b1) mindestens ein Comonomer b2) umfasst, das aus Mono(meth)acrylaten oder Di(meth)acrylaten von Oligoetherdiolen gewählt ist, wobei die Oligoetherdiole 2 bis 4 Alkoxyeinheiten oder (Meth)acrylat von Tetrahydrofurfuryl umfassen.

6. Harzzusammensetzung wie gemäß Anspruch 5 definiert, wobei das Comonomer b2) aus Tetrahydrofurfuryl(meth)acrylat, Methoxypolyethylenglykol-350-mono(meth)acrylat, Ethylenglykoldi(meth)acrylat und Diethylenglykoldi(meth)acrylat gewählt ist.

7. Harzzusammensetzung wie gemäß den Ansprüchen 5 oder 6 definiert, wobei das Gewichtsverhältnis der Komponente b2) bezüglich des Gesamtgewichts von b1) + b2) im Bereich von 0 bis 50 %, und vorzugsweise 0 bis 30 %, liegt.

8. Harzzusammensetzung wie gemäß den Ansprüchen 1 bis 7 definiert, wobei die Volumenviskosität bei 25°C, gemessen gemäß Standard ISO 3219, im Bereich von 15.000 bis 30.000 mPa.s liegt.

9. Harzzusammensetzung wie gemäß den Ansprüchen 1 bis 8 definiert, wobei der ungesättigte Polyester a) ein zahlenmittleres Molekulargewicht Mn im Bereich von 400 bis 900 aufweist.

10. Harzzusammensetzung wie gemäß den Ansprüchen 1 bis 9 definiert, wobei der ungesättigte Polyester a) eine Säurezahl von bis zu 40 mg KOH/g, vorzugsweise bis zu 30 mg KOH/g, und stärker bevorzugt von 10 bis 30 mg KOH/g aufweist.

11. Harzzusammensetzung wie gemäß den Ansprüchen 1 bis 10 definiert, wobei der ungesättigte Polyester a) das Reaktionsprodukt ist von:
i) mindestens einer sauren Komponente, umfassend mindestens ein(e) α,β-ethylenisch ungesättigte Dicarbonsäure und/oder -anhydrid,
ii) einer alkoholischen Komponente, umfassend:
ii) c) mindestens ein Diol mit 2 bis 8 Kohlenstoffatomen,
ii) d) eine Monoalkoholkomponente, umfassend:
ii) d1) mindestens einen Monoalkohol, welcher mindestens eine allylische Ungesättigtheit trägt, und
ii) d2) mindestens einen gesättigten aliphatischen Monoalkohol mit 4 bis 10 Kohlenstoffatomen oder einen aromatischen Monoalkohol mit 7 bis 10 Kohlenstoffatomen.

12. Harzzusammensetzung wie gemäß Anspruch 11 definiert, wobei der Monoalkohol ii) d1) aus allylischem Alkohol, Trimethylolpropandiallylether, Glyceroldiallylether, Pentaerythritoltriallylether oder Mischungen von diesen Alkoholen gewählt ist und der gesättigte aliphatische oder aromatische Monoalkohol ii) d2) aus Butanol, Benzylalkohol, Cyclohexanol, n-Hexanol, Isooctanol, Isododecanol oder Mischungen von diesen Alkoholen gewählt ist.

13. Harzzusammensetzung wie gemäß Anspruch 12 definiert, wobei der Monoalkohol ii) d1) ein Trimethylolpropandiallylether ist und der Monoalkohol ii) d2) Benzylalkohol ist.

14. Harzzusammensetzung wie gemäß den Ansprüchen 11 bis 13 definiert, wobei das Molverhältnis ii) d1) / ii) d2) im Bereich von 0,8 bis 1,5, und vorzugsweise von 0,9 bis 1,2 liegt.

15. Harzzusammensetzung wie gemäß den Ansprüchen 11 bis 14 definiert, wobei die Komponente ii) d1) für 15 bis 25% der gesamten OH-Äquivalente der gesamten alkoholischen Komponente ii) steht.

16. Härtbare Beschichtungs- oder Formzusammensetzung, **dadurch gekennzeichnet, dass** diese mindestens eine Harzzusammensetzung, wie gemäß den Ansprüchen 1 bis 15 definiert, umfasst.

17. Beschichtungszusammensetzung wie gemäß Anspruch 16 definiert, wobei die Beschichtungszusammensetzung eine Zusammensetzung einer Schutzbeschichtung und/oder einer Dekorbeschichtung und/oder Oberflächenbehandlung für Holz und Derivate, Holzimitationsmaterialien, Metall- oder Kunststoffsubstrate ist.

18. Beschichtungszusammensetzung wie gemäß den Ansprüchen 16 oder 17 definiert, wobei die Beschichtungszusammensetzung eine Lack-, Klarlack-, Dichtungsmittel- oder Gelüberzugszusammensetzung ist.

19. Beschichtungs- oder Formzusammensetzung wie gemäß den Ansprüchen 16 bis 18 definiert, wobei die Beschichtungszusammensetzung eine sprühbare Zusammensetzung ist.

20. Beschichtungs- oder Formzusammensetzung wie gemäß den Ansprüchen 16 bis 19 definiert, wobei die Zusammensetzung durch Strahlung und/oder durch Peroxid oder auf thermischem Wege härtbar ist.

21. Verwendung einer Harzzusammensetzung wie gemäß den Ansprüchen 1 bis 15 definiert, **dadurch gekennzeichnet, dass** diese eine strahlungshärtbare oder eine Peroxid-härtbare Beschichtungs- oder Formzusammensetzung ist.

22. Verwendung wie gemäß Anspruch 21 definiert, wobei die Beschichtungszusammensetzung eine Lack-, Klarlack-, Dichtungsmittel- oder Gelüberzugszusammensetzung ist.

23. Verwendung, wie gemäß den Ansprüchen 21 oder 22 definiert, für die Schutz- und/oder Dekor- und/oder Oberflächenbehandlung von Holz und Derivaten, Holzimitationsmaterialien, Metall- oder Kunststoffsubstraten.

24. Verwendung wie gemäß Anspruch 23 definiert, wobei die Verwendung bei Möbeln oder Kraftfahrzeuganwendungen erfolgt.

25. Verwendung wie gemäß den Ansprüchen 21 bis 24 definiert, wobei die Beschichtungen dicke mehrschichtige Beschichtungen mit einer Gesamtdicke von 100 bis 2000 µm sind.

26. Verwendung wie gemäß den Ansprüchen 21 bis 25 definiert, wobei die Verwendung in Dichtungsmitteln für ein Holz-Finish oder in glänzenden Schutz- oder Dekorbeschichtungen erfolgt.

27. Verwendung wie gemäß Anspruch 21 definiert, wobei die Formzusammensetzung eine Komposit- oder Laminatzusammensetzung ist.

28. Verfahren zum Härten einer Beschichtungs- oder einer Formzusammensetzung wie gemäß den Ansprüchen 16 bis 20 definiert, **dadurch gekennzeichnet, dass** diese mindestens einen Schritt des Härtens durch Strahlung und/oder durch Peroxid oder auf thermischem Wege umfasst.

29. Beschichtung, Formgegenstand, Komposit oder Laminat, **dadurch gekennzeichnet, dass** diese aus dem Härten von mindestens einer Zusammensetzung, wie gemäß den Ansprüchen 16 bis 20 definiert, resultieren.

30. Beschichtung wie gemäß Anspruch 29 definiert, wobei die Beschichtung eine mehrschichtige Beschichtung mit einer Dicke im Bereich von 100 bis 2000 µm ist.

31. Beschichtung wie gemäß den Ansprüchen 29 bis 30 definiert, wobei die Beschichtung ein gehärteter Lack, Klarlack oder ein Gelüberzug ist.

32. Verfahren zum Aufbringen einer Beschichtung auf ein Substrat, **dadurch gekennzeichnet, dass** dieses mindestens die folgenden Schritte umfasst:
a) Sprühen einer Beschichtungszusammensetzung wie gemäß den Ansprüchen 16 bis 20 definiert auf das Substrat,
b) Aufbringen mindestens einer Beschichtung, und vorzugsweise von 2 bis 6 Beschichtungen, auf das Substrat, um eine Dicke von 100 bis 2000 µm und vorzugsweise von 200 bis 1000 µm zu erhalten,
c) Trocknen dieses beschichteten Substrats, und
d) gegebenenfalls Polieren der Oberfläche nach mindestens 24 Stunden.

33. Beschichtetes Substrat, **dadurch gekennzeichnet, dass** dieses mindestens eine Schicht einer gehärteten Beschichtung umfasst, die aus einer Beschichtungszusammensetzung wie gemäß den Ansprüchen 16 bis 20 definiert resultiert.

34. Beschichtetes Substrat wie gemäß Anspruch 33 definiert, wobei das Substrat Holz und Derivate, Holzimitationsmaterialien, Metall oder Kunststoff ist.

35. Kraftfahrzeug-Innenausstattungsteil für dekorative Zwecke, **dadurch gekennzeichnet, dass** dieses mit mindestens einer Beschichtungszusammensetzung wie gemäß den Ansprüchen 16 bis 20 definiert beschichtet ist.

## Revendications

1. Composition de résine **caractérisée en ce qu'**elle comprend :
a) au moins un polyester à insaturation α,β-éthylénique, liquide à température ambiante, ledit polyester insaturé a) ayant une viscosité apparente à 25°C, mesurée selon la norme ISO 3219, allant de 15 000 à 40 000 mPa.s, et
b) au moins un constituant comonomère comprenant :
b1) au moins un comonomère choisi parmi les (méth)-acrylates d'alcools cycloaliphatiques, et
b2) le cas échéant, au moins un comonomère différent de b1),
et **en ce que** la proportion pondérale dudit comonomère b) par rapport au poids total de a) + b) s'échelonne de 0.5 à 45%, ladite composition de résine étant dépourvue de styrène.

2. Composition de résine telle que définie selon la revendication 1, dans laquelle ledit (méth)acrylate d'alcool cycloaliphatique comprend une structure cycloaliphatique choisie parmi isobornyle, dicyclopentadiényle ou cyclohexyle.

3. Composition de résine telle que définie selon la revendication 1 ou 2, dans laquelle ledit comonomère b1) est l'acrylate d'isobornyle et/ou le méthacrylate d'isobornyle.

4. Composition de résine telle que définie selon les revendications 1 à 4, dans laquelle ladite composition de résine se compose des constituants a) et b).

5. Composition de résine telle que définie selon les revendications 1 à 4, dans laquelle ledit constituant b) comprend, outre b1), au moins un comonomère b2) choisi parmi les mono (méth) acrylates ou di(méth)acrylates d'oligoéther-diols, lesdits oligoéther-diols comprenant de 2 à 4 motifs alcoxy, ou le (méth)acrylate de tétrahydrofurfuryle.

6. Composition de résine telle que définie selon la revendication 5, dans laquelle ledit comonomère b2) est choisi parmi le (méth)acrylate de tétrahydrofurfuryle, le mono(méth)acrylate de méthoxypolyéthylèneglycol 350, le di(méth)acrylate d'éthylèneglycol et le di(méth)-acrylate de diéthylèneglycol.

7. Composition de résine telle que définie selon la revendication 5 ou 6, dans laquelle le rapport pondéral dudit constituant b2) par rapport au poids total de b1) + b2) s'échelonne de 0 à 50%, et de préférence de 0 à 30%.

8. Composition de résine telle que définie selon les revendications 1 à 7, dans laquelle la viscosité en masse à 25°C, mesurée selon la norme ISO 3219, s'échelonne de 15 000 à 30 000 mPa.s.

9. Composition de résine telle que définie selon les revendications 1 à 8, dans laquelle ledit polyester insaturé a) possède une masse moléculaire moyenne en nombre Mn allant de 400 à 900.

10. Composition de résine telle que définie selon les revendications 1 à 9, dans laquelle ledit polyester insaturé a) possède un indice d'acide allant jusqu'à 40 mg de KOH/g, de préférence jusqu'à 30 mg de KOH/g, et plus préférentiellement de 10 à 30 mg de KOH/g.

11. Composition de résine telle que définie selon les revendications 1 à 10, dans laquelle ledit polyester insaturé a) est le produit de réfaction :
i) d'au moins un composant acide comprenant au moins un acide et/ou anhydride dicarboxylique à insaturation α,β-éthylénique,
ii) d'un composant alcool comprenant :
ii) c) au moins un diol comportant 2 à 8 atomes de carbone,
ii) d) un composant monoalcool comprenant :
ii) d1) au moins un monoalcool portant au moins une insaturation allylique, et
ii) d2) au moins un monoalcool aliphatique saturé comportant 4 à 10 atomes de carbone ou un monoalcool aromatique comportant 7 à 10 atomes de carbone.

12. Composition de résine telle que définie selon la revendication 11, dans laquelle ledit monoalcool ii) d1) est choisi parmi l'alcool allylique, l'éther diallylique de triméthylolpropane, l'éther diallylique de glycérol, l'éther triallylique de pentaérythritol ou des mélanges de ces alcools, et ledit monoalcool aliphatique ou aromatique saturé ii) d2) est choisi parmi le butanol, l'alcool benzylique, le cyclohexanol, le n-hexanol, l'isooctanol, l'isododécanol ou des mélanges de ces alcools.

13. Composition de résine telle que définie selon la revendication 12, dans laquelle ledit monoalcool ii) d1) est un éther diallylique de triméthylolpropane, et ledit monoalcool ii) d2) est l'alcool benzylique.

14. Composition de résine telle que définie selon les revendications 11 à 13, dans laquelle le rapport molaire ii) d1) /ii) d2) s'échelonne de 0,8 à 1,5, et de préférence de 0,9 à 1,2.

15. Composition de résine telle que définie selon les revendications 11 à 14, dans laquelle ledit constituant ii) d1) représente de 15 à 25% du nombre total d'équivalents OH de l'ensemble du constituant alcool ii).

16. Composition de revêtement ou de moulage durcissable **caractérisée en ce qu'**elle comprend au moins une composition de résine telle que définie selon les revendications 1 à 15.

17. Composition de revêtement telle que définie selon la revendication 16, dans laquelle ladite composition de revêtement est une composition de revêtement protecteur et/ou de revêtement décoratif et/ou de traitement de surface pour bois et dérivés, matériaux d'imitation du bois, substrats en métal ou en plastique.

18. Composition de revêtement telle que définie selon la revendication 16 ou 17, dans laquelle ladite composition de revêtement est une composition de peinture, de vernis, d'apprêt d'impression ou de gel coat.

19. Composition de revêtement ou de moulage telle que définie selon les revendications 16 à 18, dans laquelle ladite composition est une composition à pulvériser.

20. Composition de revêtement ou de moulage telle que définie selon les revendications 16 à 19, dans laquelle ladite composition est durcissable par un rayonnement et/ou par un peroxyde ou par voie thermique.

21. Utilisation d'une composition de résine telle que définie selon les revendications 1 à 15, **caractérisée en ce qu'**il s'agit d'une composition de revêtement ou de moulage durcissable par un rayonnement ou durcissable par un peroxyde.

22. Utilisation telle que définie selon la revendication 21, dans laquelle ladite composition de revêtement est une composition de peinture, de vernis, d'apprêt d'impression ou de gel coat.

23. Utilisation telle que définie selon les revendications 21 ou 22 destinée à la protection et/ou à la décoration et/ou au traitement d'une surface de bois et dérivés, de matériaux d'imitation du bois, de substrats en métal ou en plastique.

24. Utilisation telle que définie selon la revendication 23, dans laquelle ladite utilisation s'applique au domaine du mobilier ou de l'automobile.

25. Utilisation telle que définie selon les revendications 21 à 24, dans laquelle lesdits revêtements sont des revêtements multicouches épais ayant une épaisseur totale de 100 à 2000 µm.

26. Utilisation telle que définie selon les revendications 21 à 25, dans laquelle ladite utilisation réside dans des apprêts d'impression pour la finition du bois ou dans des revêtements protecteurs ou décoratifs brillants.

27. Utilisation telle que définie selon la revendication 21, dans laquelle ladite composition de moulage est un composite ou une composition de stratifié.

28. Procédé permettant de durcir une composition de revêtement ou de moulage telle que définie selon les revendications 16 à 20, **caractérisé en ce qu'**il comprend au moins une étape de durcissement par rayonnement et/ou par un peroxyde ou par voie thermique.

29. Revêtement, article moulé, composite ou stratifié, **caractérisé en ce qu'**il résulte du durcissement d'au moins une composition telle que définie selon les revendications 16 à 20.

30. Revêtement tel que défini selon la revendication 29, dans lequel ledit revêtement est un revêtement multicouche ayant une épaisseur allant de 100 à 2000 µm.

31. Revêtement tel que défini selon les revendications 29 ou 30, dans lequel le revêtement est un revêtement durci de peinture, de vernis ou de gel coat.

32. Procédé permettant d'appliquer un revêtement sur un substrat, **caractérisé en ce qu'**il comprend au moins les étapes consistant à :
a) pulvériser une composition de revêtement telle que définie selon les revendications 16 à 20 sur ledit substrat,
b) appliquer au moins une couche, et de préférence 2 à 6 couches, sur ledit substrat, pour obtenir une épaisseur de 100 à 2000 µm, et de préférence de 200 à 1000 µm,
c) sécher ce substrat revêtu, et
d) le cas échéant, polir la surface après au moins 24 heures.

33. Substrat revêtu **caractérisé en ce qu'**il comprend au moins une couche d'un revêtement durci, résultant d'une composition de revêtement telle que définie selon les revendications 16 à 20.

34. Substrat revêtu tel que défini selon la revendication 33, dans lequel ledit substrat est du bois et des dérivés, des matériaux d'imitation du bois, du métal ou du plastique.

35. Pièce de carrosserie pour intérieur d'automobile à but décoratif, **caractérisée en ce qu'**elle est revêtue d'au moins une composition de revêtement telle que définie selon les revendications 16 à 20.
